# EUROPEAN PATENT SPECIFICATION

(11) **EP 2 524 640 B1**
(45) Date of publication and mention of the grant of the patent: **09.08.2017**
(21) Application number: 10843232.9
(22) Date of filing: 14.01.2010
(51) Int. Cl.: A47L 9/00, A47L 9/28, H02J 3/14

(54) **VACUUM CLEANER USING SMART GRID**
STAUBSAUGER MIT INTELLIGENTEM STROMNETZ
ASPIRATEUR UTILISANT UN RÉSEAU INTELLIGENT

(43) Date of publication of application: 21.11.2012
(73) Proprietor: LG Electronics Inc., Seoul 150-721 (KR)
(72) Inventor: KANG, Sung-Su, Gyoungsangnam-do 641-711 (KR)
(74) Representative: Vossius & Partner Patentanwälte Rechtsanwälte mbB
(86) International application number: PCT/KR2010/000231
(87) International publication number: WO 2011/087166

(56) References cited:
- EP-A2- 1 806 831
- WO-A1-2008/146985
- JP-A- 2001 092 541
- JP-A- 2001 321 310
- JP-A- 2007 075 319
- KR-B1- 100 539 517
- US-A- 5 265 305
- US-A1- 2003 036 820
- US-A1- 2008 062 618

## Description

### TECHNICAL FIELD

The present invention relates to a vacuum cleaner using a smart grid.

### BACKGROUND ART

In general, a vacuum cleaner is configured to perform a cleaning task by receiving operating power in order of a power plant operated by public enterprises or private enterprises, a transmission line, and a distribution line.

However, the above power supply structure has the nature of a central power source not a distributed power source, has a radial-type shape that spreads from the center to the periphery, and is one-directional supplier-oriented not consumer-oriented.

Then, in relation to the above one-directional supplier-oriented power supply structure, there may be a price difference in electricity supplied according to a demand, but a consumer may not effectively utilizes the price difference due to the limited power supply structure.

In order to resolve the limitations and improve the efficiency of energy use, studies on a smart grid are actively in progress in recent years.

The smart grid grafts information technology (IT) on a typical power grid to exchange real-time information in two way directions between a power supplier and a consumer. That is, the smart grid refers to a next generation power system and its management system for optimizing energy efficiency.

Moreover, in order to implement the above smart grid at home, the need on two-way communication relating to power supply source and power information, being free from the case that an individual electronic device unilaterally receives power from a network having a plurality of electronic devices connected, and also, the need on new devices for the two-way communication are being considered.

EP 1 806 831 A2 discloses a portable airflow appliance with an impeller rotated by a universal electric motor and is powered alternatively by the electrical mains or by an internal battery. It includes a DC-DC electronic converter unit which converts the direct low voltage of the batteries into a direct voltage intermediate between the battery voltage and the relatively high mains voltage and switching means allowing sending to the motor alternatively said intermediate voltage or said relatively high mains voltage.

WO 2008/146985 A1 discloses a cleaner that can automatically respond to a change in an AC voltage and a voltage of a battery. In the motor, a motor for rotating a collecting fan is driven by a motor driver. The motor driver drives the motor using a voltage from a voltage selector. The voltage selector switches between a low-level voltage of the battery and a high-level voltage derived from the AC voltage to be supplied to the motor driver.

US 2008/062618 A1 discloses a cleaning apparatus comprising a cleaning unit driven by an electric motor and a housing which has a battery chamber for accommodating at least one rechargeable battery, a connecting device having a mechanical mounting part and an electrical plug connector part being disposed in the battery chamber for establishing an electrical and mechanical connection between the battery and the cleaning apparatus. In order to further develop said cleaning apparatus in such a way that batteries of different physical shapes can be used, this publication proposes that the mounting part is detachably mounted in the battery chamber, and the plug connector part is detachably connectable as desired to the mounting part or to a chamber wall of the battery chamber.

### DISCLOSURE OF THE INVENTION

### TECHNICAL PROBLEM

Embodiments provide a vacuum cleaner that operates using lower-priced electricity through a smart grid.

Embodiments also provide a vacuum cleaner including an auxiliary power supply device, which charges the vacuum cleaner with low-priced electricity through a smart grid and is mounted at the vacuum cleaner to provide the charged electricity as an operating power thereof.

### TECHNICAL SOLUTION

The invention is specified in the claims. In one embodiment, a vacuum cleaner using a smart grid includes: a main body having a built-in suction motor; a nozzle suctioning a foreign material with air by using a suction power generated from the main body; a handle disposed between the nozzle and the main body to be gripped by a user and inputting a control command to the suction motor; an auxiliary power supply device selectively mounted at one side of the main body, and charged through a power supply source of relatively low price information in connection with a power supply network that includes an energy management system for supplying electricity to an electronic product on the basis of an advanced metering infrastructure, which measures and displays power information in real time in two-way communication with a power supply source, and power information supplied from an external in connection with the advance metering infrastructure; and a cleaner power management unit equipped in the main body, and selecting one of power provided through the auxiliary power supply device or the power supply network to use the selected one as an operating power of the suction motor.

### ADVANTAGEOUS EFFECTS

According to the present invention, provided is an auxiliary power supply device that provides charging power as power to operate a vacuum cleaner.

Moreover, the auxiliary power supply device confirms whether an electricity price is less than the maximum price set by a user and performs charging in a power management network including an advanced metering infrastructure and an energy management unit. Therefore, relatively low-priced electricity is charged and then is supplied as an operating power of the vacuum cleaner.

Furthermore, a display for notifying whether the auxiliary power supply device is available and the insufficiency of charging amount while charged electricity is used is equipped at the handle of the vacuum cleaner, so that a user may select a supply power of the vacuum cleaner according to a status of the auxiliary power supply device.

### BRIEF DESCRIPTION OF THE DRAWINGS

Fig. 1 is a schematic view illustrating one example of a home power management network connected to a vacuum cleaner according to an embodiment.
Fig. 2 is a view illustrating a configuration of a vacuum cleaner according to an embodiment.
Fig. 3 is a view illustrating a power supply structure of a vacuum cleaner according to an embodiment.
Fig. 4 is a view illustrating a configuration of an auxiliary power supply device, i.e., an important component of a vacuum cleaner, according to an embodiment.
Fig. 5 is a view illustrating a control configuration when an auxiliary power supply device is connected to a vacuum cleaner according to an embodiment.
Fig. 6 is a flowchart illustrating charging operations of an auxiliary power supply device, i.e., an important component of a vacuum cleaner, and supplying operations of the charged electricity according to an embodiment.
Fig. 7 is a flowchart illustrating a selective power supply structure for operating a vacuum cleaner according to an embodiment.

### MODE FOR CARRYING OUT THE INVENTION

Hereinafter, specific embodiments will be described with reference to the accompanying drawings. However, the idea of the present invention is not limited to suggested embodiments, and a person skilled in the art could easily suggest other embodiments within the range of the same idea.

When looking at a smart grid prior to the description of the drawings, the smart grid includes a plurality of power plants and a plurality of power equipment using solar, wind, and fuel cells for power production. The power generated from the plurality of power plants and power equipment is transmitted to a sub-control center.

The sub-control center receives the generated power and transmits the received power to a substation, and the substation converts the received power into a voltage proper for home and production facilities and distributes the converted voltage to a consumer.

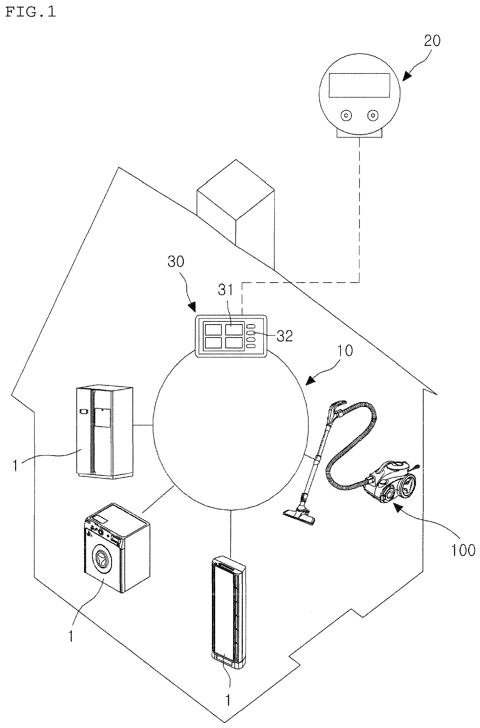

Fig. 1 is a view illustrating a home power management network distributed as above, i.e., one component of a consumer, according to an embodiment.

As shown in Fig. 1, the home power management network 10 providing an operating power to a vacuum cleaner 100 according to the present invention includes an Advanced Metering infrastructure (AMI) 20 for recognizing the supplied power and electricity charge in real time and using them, and an Energy Management System (EMS) 30 connected to the AMI 20 and responsible for real-time power management of the consumer and real-time prediction of power consumption.

Here, the AMI 20 provides a capability for allowing a consumer to efficiently use electricity and allowing a power supplier to efficiently operate a system, by detecting system problems, as generic technology that integrates consumers on the basis of an open architecture in a smart grid.

That is, in the smart grid, the AMI 20 provides a standard by which all electronic appliances are connected to each other regardless of manufacturers, and a real time price signal of an electricity market supplied through the AMI 20 is transmitted to the EMS 30 in the consumer.

Additionally, the EMS 30 distributes power to a plurality of electronic devices equipped in a home, and connects the electronic devices for communication in order to recognize power information of each electronic device. Based on this, the EMS 30 performs a power information process such as the power consumption amount or electricity charge limit setting, so that energy and cost reduction may be achieved.

That is, the power supply network 10 in a home is established including the AMI 20 for measuring a supplied power, an electricity charge, and a power consumption peak time section, and the EMS 30 connected to the AMI 20 and a plurality of electronic products 1 for two-way communication and responsible for transmitting and receiving a control signal to distribute power to each of the plurality of electronic products 1. Then, the electronic products 1 are connected to the established power supply network 10 to receive operating power.

Here, the EMS 30 includes a display 31 for displaying a current electricity consumption status and external environments (for example, a temperature, a moisture, and so on), an input unit 32 for user's manipulation, a communication unit (not shown) for communicating with the plurality of electronic products 1 via wireless or wire such as PLC, and a control unit (not shown) for processing a control signal.

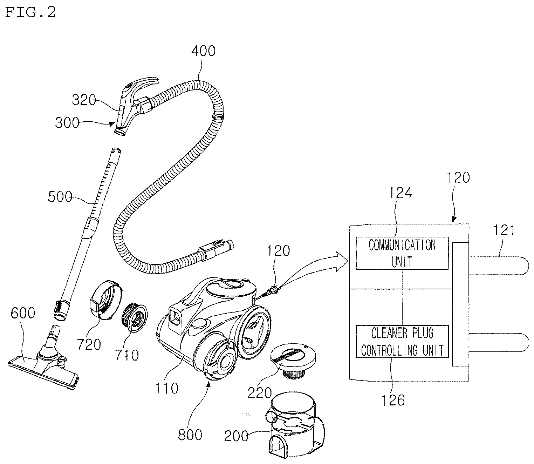

The electronic product 1 is connected to the EMS 30 for communication, and an original code for each product is registered in the EMS 30. By using the registered original code, transmission information provided from an auxiliary energy management system 200 of Fig. 2 described below may be transmitted to the electronic product 1.

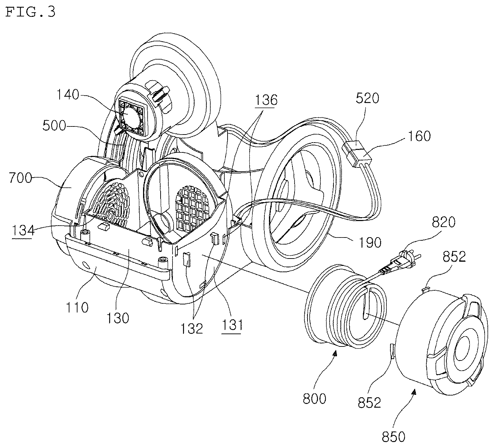

Fig. 2 is a view illustrating a configuration of a vacuum cleaner according to an embodiment. Fig. 3 is a view illustrating a power supply structure of a vacuum cleaner according to an embodiment.

Referring to the drawings, the vacuum cleaner 100 includes a nozzle for suctioning air with dust, a handle for manipulating an operation of the vacuum cleaner by a user, an extension pipe 500 for connecting the nozzle 600 with the handle 300, and a connection hose 400 for connecting the nozzle 600 with a main body 110 and guiding the suctioned air and dust to the main body 110.

Also, the handle 300 includes a control button 320 for controlling a suction power, being gripped by a user, and a display 340 for displaying an operating status of the vacuum cleaner 100 and a control signal provided from the EMS 30 or an auxiliary power supply device 800 described below.

The main body 110 includes a suction part 112 for suctioning a foreign material with air, and the connection hose 400 is combined with the suction part 112.

Additionally, a detachable dust container 200 for separating the foreign material from the air inflowing through the suction part 112 and storing the foreign material may be mounted at the main body 110, and the dust received in the dust container 200 may be emptied out by removing a dust container cover 220 that covers the top of the dust container 200.

Moreover, the main body 110 includes a discharge filter assembly 700 for preventing fine dust from being included in the discharged air when the air separated from the dust is discharged to an external, and the discharge filter assembly 700 includes a discharge filter 710 and a discharge filter cover 720.

Additionally, the vacuum cleaner 100 includes a cleaner plug 120 for delivering operating power to the main body 110 and providing two-way communication in connection with the power management network 10.

For this, the cleaner plug 120 includes a cleaner plug combining part 121 that is mounted being inserted into a socket 52 in an outlet 50 constituting the power management network 10, a communication unit 124 for delivering a control signal through the power management network 10 connected through the cleaner plug combining part 121, and a cleaner plug controlling unit 126.

That is, when the cleaner plug 120 is connected to the socket 52, an operating power of the vacuum cleaner 100 may be provided through the EMS 30. The operating power is determined from a plurality of power supply sources through the EMS 30.

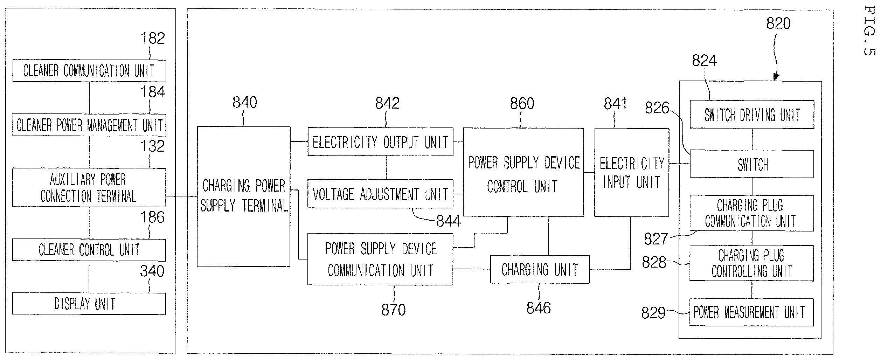

Then, the supplied power is delivered to a cleaner power management unit 184 of Fig. 5 described below, and is used as power for operating the vacuum cleaner 100.

Moreover, the main body 110 includes a motor housing 130 for providing a receiving space of a suction motor assembly 140.

The motor housing 130 has the open top through which the suction motor assembly 140 is seated, and includes a discharge port 134 at one side through which air with dust removed is discharged to an external.

Furthermore, being different from an operating power supply path of the vacuum cleaner 100 that extending from the cleaner plug 120 to the power management network 10, another power supply path of the vacuum cleaner 100 is provided at another side of the motor housing 130.

In more detail, an auxiliary power supply device mounting part 131 is provided at another side of the motor housing 130 in order for a selective mounting of the auxiliary power supply device 800 described in detail below.

For this, the auxiliary power supply device mounting part 131 includes an auxiliary power connection terminal 132 connected to the cleaner power management unit 184 of Fig. 5, being exposed to an external.

Then, the auxiliary power supply device 800 charged by receiving a charging power from the power management network 10 is selectively mounted and connected to the exposed auxiliary power connection terminal 132.

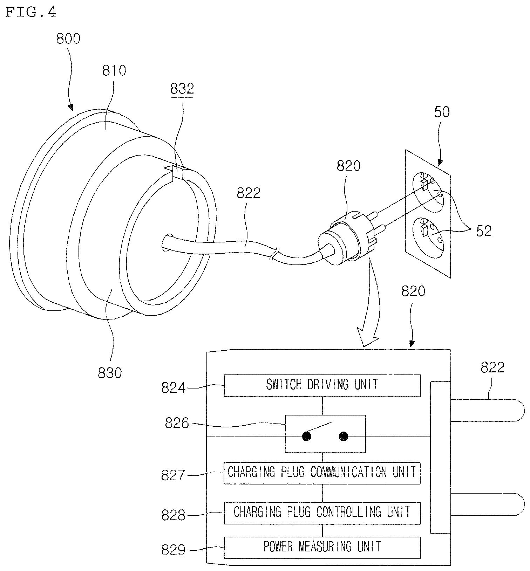

For detailed description, Fig. 4 illustrates a configuration of an auxiliary power supply device, i.e., an important component of a vacuum cleaner, according to an embodiment. Fig. 5 illustrates a control configuration when an auxiliary power supply device is connected to a vacuum cleaner according to an embodiment.

Referring to the drawings, the auxiliary power management device 800 is formed with a similar size and shape to the discharge filter assembly 700, and thus is inserted into and mounted at the auxiliary power supply device mounting part 131, contacting the auxiliary power connection terminal 132.

Moreover, in order to maintain a more solid mounting status, an auxiliary power cover 850 surrounds the entire auxiliary power supply device 800 and is coupled to the auxiliary power supply device mounting part 131.

For this, the auxiliary power supply device mounting part 131 includes a plurality of cover coupling grooves 135, and the auxiliary power cover 850 includes a plurality of cover fixing protrusions 852 corresponding thereto.

Additionally, the auxiliary power supply device 800 includes a charging power supply terminal 849 mounted at the main body 110 and connected to the cleaner power management unit 184 to provide charged power, a charging plug 820 connected to the power supply network 10, a charging unit 846 for storing electricity delivered through the charging plug 820, and a power supply device controlling unit 860 for processing a control signal.

In more detail, the charging power supply terminal 840 may supply power charged in the charging unit 846, contacting the auxiliary power connection terminal 132, when the auxiliary power supply device 800 is mounted at the auxiliary power supply device mounting part 131. The charging unit 846 may be formed with a plurality of cells.

Moreover, the charging plug 820 for supplying a power charged in the charging unit 846 includes a plug coupling part 822 inserted into and mounted at the socket 52 of the outlet 50 Moreover, the plug coupling part 822 is connected to a charging cord 822 to be easily coupled to the socket 52, and the charging code 822 is wound to a charging plug receiving part 830 for storage.

For this, the charging plug receiving part 830 is formed, which has a portion that is recessed from the edge of the auxiliary power supply device 800 to the inside, and the edge of the charging plug receiving part 830 prevents the charging code 822 that is wound being protruding toward the outside from being easily removed.

Additionally, a code winding groove 832 is provided at the edge of the charging plug receiving part 830.

The code winding groove 832 is formed with a cut portion of the edge of the charging plug receiving part 830. Therefore, after the charging code 822 is received in the code winding groove 832 and is wound along the charging plug receiving part 830, the charging plug is 820 is stored.

Then, in relation to the electricity supplied through the plug coupling part 822, a switch 826 is provided to selectively cut off the electricity supplied to the charging unit 846 according to price information on a supplied power received through a plug communication unit 827 described below.

In more detail, the plug communication unit 827 receives the price information on a supplied power in connection with the EMS 30 after the plug coupling part 822 is inserted into the socket 52.

Additionally, according to the received price information, a switch driving unit 824 controls the switch 826 to be turned on in order for a power supply source to supply electricity for charging, of which price is less than the maximum supply price stored in a charging plug controlling unit 828. Then, the switch driving unit 824 controls the switch 826 to be turned off when the electricity price is equal to or more than the maximum supply price, so that a relatively cheap power is supplied from a power supply source to the charging unit 846 for charging.

Here, the maximum supply price set in the charging plug controlling unit 828 may be the lowest electricity price that a power company provides, which may be provided after midnight.

Moreover, once the switch 826 is turned on, the electricity supplied from the EMS 30 is delivered to the charging unit 846 through an electricity input part 841 for charging, and the electricity after charging is completed is stabilized through a voltage adjusting unit 844, and then is delivered to the cleaner power management unit 184 of the vacuum cleaner 100 through an electricity output part 842 and a charging power supply terminal 840 to be used as an operating power of the vacuum cleaner 100.

Hereinafter, operations of the present invention will be described with reference to the accompanying drawings.

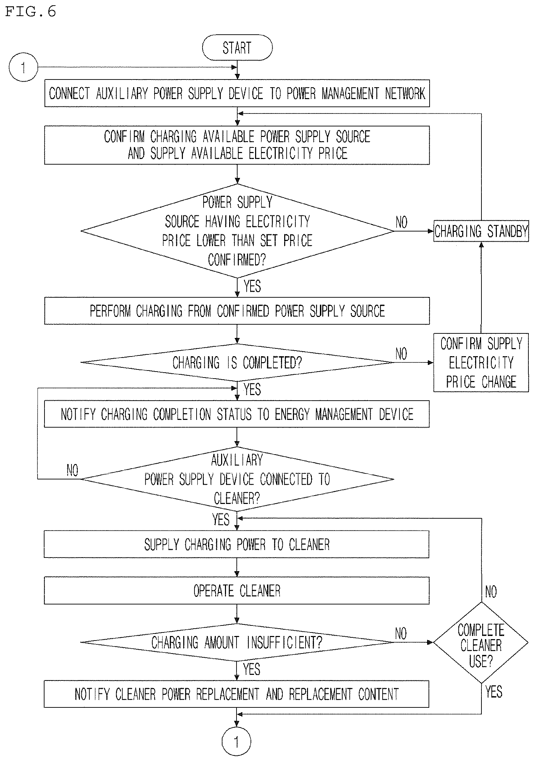

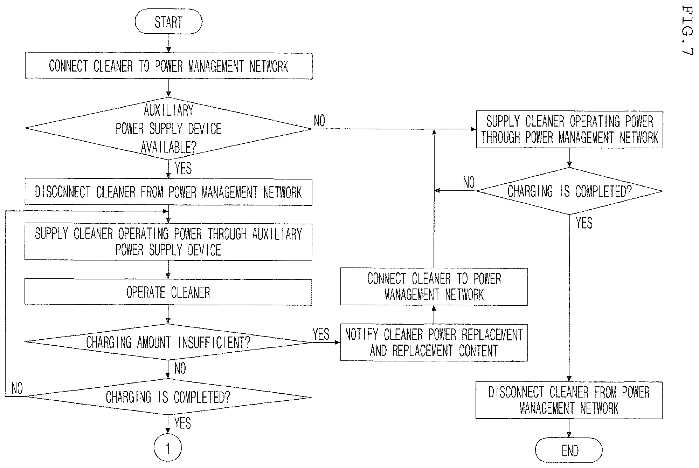

Fig. 6 is a flowchart illustrating charging operations of an auxiliary power supply device, i.e., an important component of a vacuum cleaner, and supplying operations of the charged electricity according to an embodiment. Fig. 7 is a flowchart illustrating a selective power supply structure for an operation of a vacuum cleaner according to an embodiment.

In order to use the auxiliary power supply device 800, i.e., one of power supply sources of the vacuum cleaner 100, the auxiliary power supply device 800 is connected to the power management network 10 for charging.

That is, as the charging plug 820 is connected to the socket 52, the EMS 30 is connected to the auxiliary power supply device 800 for two-way communication, and in that connection status, power supply information including a charging available power supply source and a supply available electricity price is provided to the auxiliary power supply device 800 through the EMS 30.

Additionally, the auxiliary power supply device 800 confirms a power supply source having an electricity price lower than that set in the power supply device controlling unit 860, and then, electricity for charging the charging unit 846 is supplied from the confirmed power supply source.

Additionally, if the auxiliary power supply device 800 cannot confirm a power supply source having an electricity price lower than that set in the power supply device controlling unit 860, a charging stand-by status is maintained, so that electricity for charging the charging unit 846 is not supplied.

Moreover, when the charging of the charging unit 846 is completed after the electricity is supplied from the low-priced power supply source, a charging completion status of the auxiliary power supply device 800 is delivered to the EMS 30 through the charging plug communication unit 827.

Then, when a user inserts the cleaner plug 120 into the socket 52 for mounting in order to operate the vacuum cleaner 100 in the above status, the display 340 at the handle 300 of the vacuum cleaner 100 displays an available status from the EMS 30 as the charging of the auxiliary power supply device 800 is completed.

Accordingly, after a user confirms the available status, the auxiliary power supply device 800 is mounted on the main body 100, and the mounted auxiliary power supply device 800 supplies the charged power to the cleaner power management unit 184 in order to use it as an operating power of the vacuum cleaner 100.

Moreover, if the charging amount of the charging unit 846 is reduced to less than a standard capacity while the vacuum cleaner 100 is used with the provided charged power, the power supply device controlling unit 860 sends a message to the display 340 through the power supply device communication unit 870, which notifies that the power of the vacuum cleaner 100 in use needs to be replaced due to the insufficiency of the charging amount.

Furthermore, when the user confirms the message, the auxiliary power supply device 800 is separated from the main body 110, and is connected to the socket 52 again for charging.

Additionally, when the vacuum cleaner 100 is completely used, the auxiliary power supply device 800 may be connected to the socket 52 for charging. In this case, without separating the auxiliary power supply device 800 from the cleaner main body 110, charging may be accomplished.

### INDUSTRIAL APPLICABILITY

According to the present invention, a power for operating a vacuum cleaner may be provided separately through a power supply path connecting a power management network and a cleaner plug and a power supply path connected to an auxiliary power supply device at one side of a main body to supply charging power.

Additionally, in relation to the power supply path including the auxiliary power supply device, an available status is notified to a user through a smart grid, so that the user may preferentially use an operating power of a vacuum cleaner, which charged at an inexpensive price.

Moreover, the auxiliary power supply device receives electricity for charging from a power supply source at a relatively inexpensive price in communication with an energy management system, and then, the charged power is preferentially used for a vacuum cleaner. Therefore, the vacuum cleaner operates at an inexpensive price.

Furthermore, when such an auxiliary power supply device is used, wasted power is reduced. Thus, related industries may be developed and also environmental pollution caused by generating electricity may be reduced.

## Claims

1. A vacuum cleaner (100) using a smart grid, comprising:
a main body (110) having a built-in suction motor;
a nozzle (600) suctioning a foreign material with air by using a suction power generated from the main body (110);
a handle (300) disposed between the nozzle (600) and the main body (110) to be gripped by a user and inputting a control command to the suction motor;
an auxiliary power supply device (800) selectively mounted at one side of the main body (110) and comprising a communication unit (827) such that said auxiliary power supply device can be charged through a power supply source of relatively low price information in connection with a power supply network (10) that includes an energy management system (30) for supplying electricity to an electronic product on the basis of an advanced metering infrastructure, which measures and displays power information in real time in two-way communication with a power supply source, and power information supplied from an external in connection with the advance metering infrastructure; and
a cleaner power management unit (184) equipped in the main body (110), and selecting one of power provided through the auxiliary power supply device (800) or the power supply network (10) to use the selected one as an operating power of the suction motor.

2. The vacuum cleaner according to claim 1, wherein the auxiliary power supply (800) device comprises: a charging power supply terminal (840) mounted at the main body (10) and providing charged power in connection with the cleaner power management unit (184);
a charging plug (820) connected to the power supply network (10);
a charging unit (846) storing an electricity delivered through the charging plug (820); and
a power supply device controlling unit (860) processing a control signal.

3. The vacuum cleaner according to claim 2, wherein the charging plug (820) comprises:
a switch (826) selectively selecting an electricity supplied to the charging unit (846) according to price information of a supplied power received through the communication unit; and
a charging plug controlling unit (828) receiving price information among power information supplied from the energy management system (30), and comparing a set power supply maximum price with the received price information in order to receive electricity for charging from a power supply source having a price lower than the maximum price.

4. The vacuum cleaner according to claim 1, wherein the handle (300) comprises a display (340) for notifying information on whether the auxiliary power supply device (800) is available or insufficiency of charging amount.

5. The vacuum cleaner according to claim 4, wherein each of the auxiliary power supply device (800) and the main body (110) comprises a power supply device communication unit (870) and a cleaner communication unit (182) in order to deliver to the display (340) power supply information on whether a power charged in the auxiliary power supply device (800) is available or an insufficient status of charged electricity.

6. The vacuum cleaner according to claim 5, wherein the power supply device communication unit (870) provides power supply information to the display (340) in connection with the cleaner communication unit (182) when the auxiliary power supply device (800) is mounted at the main body (110), and transmits power supply information to the display (340) through the energy management system (30) when the main body (110) is directly connected to the power management network (10).

7. The vacuum cleaner of claim 2, wherein the auxiliary power supply device (800) comprises a charging plug receiving unit (830) to store the charging plug (820).

8. A method of controlling a vacuum cleaner including a main body; and an auxiliary power supply device having a switch, a communication unit and a charging unit selectively connected to the main body; the method comprising:
receiving price information on power by the communication unit; and
supplying electricity to the charging unit by turning on the switch when the received price information is less than or equal to a set power supply maximum price.

9. The method according to claim 8, further comprising supplying electricity from the charging unit to the main body when the auxiliary power supply device is connected to the main body.

## Patentansprüche

1. Staubsauger (100), der ein intelligentes Stromnetz verwendet, aufweisend:
einen Hauptkörper (110) mit einem eingebauten Saugmotor;
eine Düse (600), die unter Verwendung einer aus dem Hauptkörper (110) erzeugten Saugkraft ein Fremdmaterial mit Luft einsaugt;
ein zwischen der Düse (600) und dem Hauptkörper (110) angeordnetes Griffelement (300), das von einem Benutzer zu greifen ist und einen Steuerbefehl in den Saugmotor eingibt;
eine Hilfsenergieversorgungsvorrichtung (800), die selektiv an einer Seite des Hauptkörpers (110) angebracht ist und eine Kommunikationseinheit (827) aufweist, so dass die Hilfsenergieversorgungsvorrichtung über eine Energieversorgungsquelle einer relativ niedrigen Preisinformation in Verbindung mit einem Energieversorgungsnetz (10) aufgeladen werden kann, das ein Energiemanagementsystem (30) zum Versorgen eines elektronischen Produkts mit Elektrizität auf Basis einer fortschrittlichen Stromzähler-Infrastruktur aufweist, die Energieinformation in Echtzeit in Zweiwege-Kommunikation mit einer Energieversorgungsquelle und von extern bereitgestellte Energieinformation in Verbindung mit der fortschrittlichen Stromzähler-Infrastruktur misst und anzeigt; und
eine Staubsauger-Energiemanagementeinheit (184), die in dem Hauptkörper (110) angeordnet ist und eine von der Hilfsenergieversorgungsvorrichtung (800) bereitgestellte Energie oder die von dem Energieversorgungsnetz (10) bereitgestellte Energie wählt, um die gewählte Energie als eine Betriebsenergie des Saugmotors zu verwenden.

2. Staubsauger nach Anspruch 1, wobei die Hilfsenergieversorgungsvorrichtung (800) aufweist:
einen Ladeenergieversorgungsanschluss (840), der an dem Hauptkörper (10) angebracht ist und Ladeenergie in Verbindung mit der Staubsauger-Energieversorgungseinheit (184) bereitstellt;
einen Ladestecker (820), der mit dem Energieversorgungsnetz (10) verbunden ist;
eine Ladeeinheit (846), die Elektrizität speichert, die über den Ladestecker (820) geliefert wird; und
eine Energieversorgungsvorrichtung-Steuereinheit (860), die ein Steuersignal verarbeitet.

3. Staubsauger nach Anspruch 2, wobei der Ladestecker (820) aufweist:
einen Schalter (826), der gemäß einer über die Kommunikationseinheit empfangenen Preisinformation, die eine zugeführte Energie betrifft, selektiv eine der Ladeeinheit (846) zugeführte Elektrizität wählt; und
eine Ladestecker-Steuereinheit (828), die von dem Energiemanagementsystem (30) gelieferte Preisinformation unter Energieinformation empfängt und einen festgesetzten maximalen Energieversorgungspreis mit der empfangenen Preisinformation vergleicht, um aus einer Energieversorgungsquelle, die einen niedrigeren Preis als den festgesetzten maximalen Preis hat, Elektrizität zum Laden zu empfangen.

4. Staubsauger nach Anspruch 1, wobei das Griffelement (300) eine Anzeige (340) aufweist, um Information darüber, ob die Hilfsenergieversorgungsvorrichtung (800) verfügbar ist oder eine unzureichende Lademenge hat, zu melden.

5. Staubsauger nach Anspruch 4, wobei die Hilfsenergieversorgungsvorrichtung (800) und der Hauptkörper (110) jeweils eine Energieversorgungsvorrichtung-Kommunikationseinheit (870) und eine Staubsauger-Kommunikationseinheit (182) aufweisen, um der Anzeige (340) Energieversorgungsinformation bereitzustellen, darüber, ob eine in der Hilfsenergieversorgungsvorrichtung (800) geladene Energie verfügbar ist oder ein Zustand geladener Elektrizität unzureichend ist.

6. Staubsauger nach Anspruch 5, wobei die Energieversorgungsvorrichtung-Kommunikationseinheit (870) Energieversorgungsinformation zu der Anzeige (340) in Verbindung mit der Staubsauger-Kommunikationseinheit (182) schickt, wenn die Hilfsenergieversorgungsvorrichtung (800) an dem Hauptkörper (110) angebracht ist, und Energieversorgungsinformation über das Energiemanagementsystem (30) zu der Anzeige (340) sendet, wenn der Hauptkörper (110) direkt mit dem Energiemanagementnetz (10) verbunden ist.

7. Staubsauger nach Anspruch 2, wobei die Hilfsenergieversorgungsvorrichtung (800) eine Ladestecker-Aufnahmeeinheit (830) aufweist, um den Ladestecker (820) unterzubringen.

8. Verfahren zur Steuerung eines Staubsaugers, der aufweist: einen Hauptkörper; und eine Hilfsenergieversorgungsvorrichtung mit einem Schalter, einer Kommunikationseinheit und einer selektiv mit dem Hauptkörper verbundenen Ladeeinheit; wobei das Verfahren aufweist:
Empfangen von Energiepreisinformation über die Kommunikationseinheit; und
Versorgen der Ladeeinheit mit Elektrizität durch Drehen an dem Schalter, wenn die empfangene Preisinformation kleiner als oder gleich einem festgesetzten maximalen Energieversorgungspreis ist.

9. Verfahren nach Anspruch 8, ferner aufweisend: Versorgen des Hauptkörpers mit Elektrizität aus der Ladeeinheit, wenn die Hilfsenergieversorgungsvorrichtung mit dem Hauptkörper verbunden ist.

## Revendications

1. Aspirateur (100) utilisant un réseau intelligent, comprenant :
un corps principal (110) ayant un moteur d'aspiration intégré ;
un suceur (600) aspirant une matière étrangère avec de l'air en utilisant une puissance d'aspiration générée par le corps principal (110) ;
une poignée (300) disposée entre le suceur (600) et le corps principal (110) destinée à être saisie par un utilisateur et appliquant une commande de contrôle au moteur d'aspiration ;
un dispositif d'alimentation auxiliaire (800) monté sélectivement sur un côté du corps principal (110) et comprenant une unité de communication (827) de telle sorte que ledit dispositif d'alimentation auxiliaire peut être chargé par le biais d'une source d'alimentation électrique d'informations de prix relativement bas en liaison avec un réseau d'alimentation électrique (10) qui comporte un système de gestion d'énergie (30) pour fournir de l'électricité à un produit électronique sur la base d'une infrastructure de mesurage élaborée, qui mesure et affiche des informations de puissance en temps réel dans une communication bidirectionnelle avec une source d'alimentation électrique, et des informations de puissance fournies depuis un extérieur en liaison avec l'infrastructure de mesure élaborée ; et
une unité de gestion de puissance d'aspirateur (184) équipant le corps principal (110), et sélectionnant une puissance fournie par le dispositif d'alimentation auxiliaire (800) ou le réseau d'alimentation électrique (10) pour utiliser la puissance choisie comme puissance utile du moteur d'aspiration.

2. Aspirateur selon la revendication 1, dans lequel le dispositif d'alimentation auxiliaire (800) comprend : une borne d'alimentation électrique de chargement (840) montée sur le corps principal (10) et fournissant une puissance chargée en liaison avec l'unité de gestion de puissance d'aspirateur (184) ;
une prise de chargement (820) connectée au réseau d'alimentation électrique (10) ; une unité de chargement (846) stockant une électricité distribuée par la prise de chargement (820) ; et
une unité de commande de dispositif d'alimentation électrique (860) traitant un signal de commande.

3. Aspirateur selon la revendication 2, dans lequel la prise de chargement (820) comprend :
un commutateur (826) sélectionnant de manière sélective une électricité fournie à l'unité de chargement (846) en fonction d'informations de prix d'une puissance reçue par le biais de l'unité de communication ; et
une unité de commande de prise de chargement (828) recevant des informations de prix parmi des informations de puissance fournies par le système de gestion d'énergie (30), et comparant un prix d'alimentation électrique défini maximal à des informations de prix reçues afin de recevoir de l'électricité pour le chargement d'une source d'alimentation électrique ayant un prix inférieur au prix maximal.

4. Aspirateur selon la revendication 1, dans lequel la poignée (300) comprend un affichage (340) pour notifier des informations quant à la disponibilité du dispositif d'alimentation auxiliaire (800) ou l'insuffisance de quantité de chargement.

5. Aspirateur selon la revendication 4, dans lequel chacun du dispositif d'alimentation auxiliaire (800) et du corps principal (110) comprend une unité de communication de dispositif d'alimentation électrique (870) et une unité de communication d'aspirateur (182) afin de distribuer à l'affichage (340) des informations d'alimentation électrique indiquant si une puissance chargée dans le dispositif d'alimentation auxiliaire (800) est disponible ou un état insuffisant d'électricité chargée.

6. Aspirateur selon la revendication 5, dans lequel l'unité de communication de dispositif d'alimentation électrique (870) fournit des informations d'alimentation électrique à l'affichage (340) en liaison avec l'unité de communication d'aspirateur (182) lorsque le dispositif d'alimentation auxiliaire (800) est monté sur le corps principal (110), et transmet des informations d'alimentation électrique à l'affichage (340) par le biais du système de gestion d'énergie (30) lorsque le corps principal (110) est directement connecté au réseau de gestion de puissance (10).

7. Aspirateur selon la revendication 2, dans lequel le dispositif d'alimentation auxiliaire (800) comprend une unité de réception de prise de chargement (830) pour stocker la prise de chargement (820).

8. Procédé de commande d'un aspirateur comportant un corps principal ; et un dispositif d'alimentation auxiliaire ayant un commutateur, une unité de communication et une unité de chargement connectés sélectivement au corps principal ; le procédé comprenant :
la réception d'informations de prix par rapport à la puissance par l'unité de communication ; et
la fourniture d'électricité à l'unité de chargement par l'activation du commutateur lorsque les informations de prix reçues sont inférieures ou égales à un prix d'alimentation électrique défini maximal.

9. Procédé selon la revendication 8, comprenant en outre la fourniture d'électricité par l'unité de chargement au corps principal lorsque le dispositif d'alimentation auxiliaire est connecté au corps principal.
